(19) Europäisches Patentamt / European Patent Office / Office européen des brevets

(11) **EP 1 483 336 B2**

(12) **NEUE EUROPÄISCHE PATENTSCHRIFT**
Nach dem Einspruchsverfahren

(45) Veröffentlichungstag und Bekanntmachung des Hinweises auf die Entscheidung über den Einspruch:
**24.09.2014 Patentblatt 2014/39**

(45) Hinweis auf die Patenterteilung:
**20.07.2005 Patentblatt 2005/29**

(21) Anmeldenummer: 03743377.8

(22) Anmeldetag: **05.03.2003**

(51) Int Cl.:
***C09C 1/02*** (2006.01)

(86) Internationale Anmeldenummer:
**PCT/EP2003/002239**

(87) Internationale Veröffentlichungsnummer:
**WO 2003/074615 (12.09.2003 Gazette 2003/37)**

(54) **VERFAHREN ZUR HERSTELLUNG VON GECOATETEN, FEINTEILIGEN, ANORGANISCHEN FESTK RPERN UND DEREN VERWENDUNG**

METHOD FOR THE PRODUCTION OF COATED, FINE-PARTICLE, INORGANIC SOLIDS AND USE THEREOF

PROCEDE DE PRODUCTION DE CORPS SOLIDES INORGANIQUES ENDUITS, FINEMENT DIVISES, ET LEUR UTILISATION

(84) Benannte Vertragsstaaten:
**AT BE BG CH CY CZ DE DK EE ES FI FR GB GR HU IE IT LI LU MC NL PT RO SE SI SK TR**

(30) Priorität: **06.03.2002 DE 10209698**

(43) Veröffentlichungstag der Anmeldung:
**08.12.2004 Patentblatt 2004/50**

(73) Patentinhaber: **Sachtleben Chemie GmbH
47198 Duisburg (DE)**

(72) Erfinder: **AMIRZADEH-ASL, Djamschid
47445 Moers (DE)**

(74) Vertreter: **Nobbe, Matthias
Demski & Nobbe
Patentanwälte
Reichspräsidentenstraße 21-25
45470 Mülheim a.d. Ruhr (DE)**

(56) Entgegenhaltungen:

| | |
|---|---|
| EP-A- 0 424 896 | EP-A1- 0 023 387 |
| EP-A1- 0 029 137 | EP-A1- 0 380 430 |
| EP-A1- 0 811 654 | EP-A1- 1 151 966 |
| EP-A2- 0 355 808 | EP-A2- 0 572 128 |
| WO-A1-92/02587 | DE-A- 4 404 953 |
| DE-A- 10 005 685 | DE-A- 19 907 703 |
| DE-A1- 3 927 777 | DE-A1- 10 005 685 |
| DE-A1- 19 751 857 | DE-A1- 19 839 856 |
| DE-A1- 19 910 521 | FR-A1- 2 554 119 |
| GB-A- 1 537 223 | GB-A- 2 009 204 |
| GB-A- 2 151 538 | GB-A- 2 173 781 |
| GB-A- 2 293 827 | JP-A- S 591 571 |

| | |
|---|---|
| JP-A- S5 728 164 | JP-A- H01 131 265 |
| JP-A- H07 292 194 | JP-A- S58 222 133 |
| US-A- 4 563 221 | US-A- 4 608 401 |
| US-A- 5 135 967 | US-A1- 2002 102 404 |
| US-B1- 6 197 104 | |

- **GERHARDT BENZING ET AL: 'Pigmente und Farbstoffe für die Lackindustrie', 1922, EXPERT VERLAG vol. 'Eigenschaften und praktische Anwendungen'**
- **KLAUS MAYER: 'Calbonate de calcium précipité', 1996 vol. '(rapport de stage de fin d'étude)'**
- **SCHUMANN ET AL: 'Ullman's Encyclopedia of Industrial Chemistry', Bd. A 24, 1993, VCH Seite 247**
- **HÖFER ET AL: 'Ullman's Encyclopedia of industrial Chemistry', Bd. A11, 1988, VCH Seiten 465 - 466**
- **M.BABLICK, S.FEDERL, Bd. 3RD ED, 1997, VERLAG H. STAM vol. 'Das Fachwissen für den Maler und Lackierer', Seiten 380 - 381**

**Beschreibung**

Die Erfindung betrifft ein Verfahren zur Herstellung von gecoatetem Bariumsulfat sowie dessen Anwendung.

Anorganische Festkörper (z.B. anorganische Pigmente oder Füllstoffe) werden unter anderem als funktionelle Additive in Form von Pulvern oder Dispersionen in synthetische Polymere, Lacke, Farben (z.B. Druckfarben), Fasern, Papier (z.B. Laminatpapier), Klebstoffe, Keramik (z.B. Elektro- und Magenetkeramik), Emaille, Adsorptionsmittel, Ionenaustauscher, Schleif- und Poliermittel, Kühlschmierstoffe und Kühlschmierstoffkonzentrate, Feuerfestprodukte, Hartbetonstoffe, Medizinische Erzeugnisse und Kosmetika (z.B. Puder, Salben, Zahnpasta) eingearbeitet. Damit die anorganischen Festkörper in diesen Anwendungsfeldern ihre gewünschten Eigenschaften entfalten können, wird eine sehr gute und gleichmäßige Verteilung der feinteiligen anorganischen Festkörper in dem jeweiligen System angestrebt. Insbesondere bei der Einarbeitung in Polymere ist eine solche gleichmäßige Verteilung unerlässlich.

Um die Verarbeitungseigenschaften der feinteiligen anorganischen Festkörper zu verbessern, wurde in der DE 198 39 856 A1 vorgeschlagen, diese in eine Matrix aus einem organischen Trägermaterial einzubetten. Das dabei entstehende pulverförmige Zwischenprodukt besteht aus einzelnen < 1 $\mu$m großen Teilchen. Solch ein Teilchen wiederum enthält mehrere einzelne anorganische Festkörperpartikel, die in die organische Matrix eingebettet sind. Von Nachteil dieser Additive ist der relativ hohe Gehalt an organischem Trägermaterial und das für die Herstellung dieser Additive relativ aufwendige Verfahren.

In der DE 100 05 685 A1 wird vorgeschlagen, feinteiliges Bariumsulfat mit einer organischen Substanz zu belegen wobei jedes einzelne Bariumsulfatteilchen mit einer Schicht aus organischer Substanz gecoatet wird. Dabei kann der Filterkuchen aus Bariumsulfat zu einer Paste verarbeitet werden, zu der die organische Substanz gemischt wird. Anschließend wird das Gemisch getrocknet.

Eine Verfahrensvariante sieht vor, den Filterkuchen aus Bariumsulfat zu trocknen und anschließend die organische Substanz zuzugeben. Beide Verfahren haben zum Nachteil, dass die Verteilung der organischen Substanz auf den Bariumsulfatpartikeln ungleichmäßig ist. In einer weiteren Verfahrensvariante wird vorgeschlagen, den Filterkuchen aus Bariumsulfat wieder in Wasser zu suspendieren, die organische Substanz zuzugeben und dann zu trocknen. Dieses Verfahren führt zwar zu einer besseren Verteilung der organischen Substanz auf den Bariumsulfatpartikeln, nachteilig ist allerdings die relativ hohe Wassermenge, die zur Herstellung der Suspension benötigt wird und die anschließend wieder entfernt werden muss.

Aufgabe der Erfindung ist es, die Nachteile des Standes der Technik zu überwinden und ein Verfahren bereitzustellen, mit dem sich Bariumsulfat mit einer organischen Substanz so modifizieren lässt, dass sie sich problemlos als Additive in verschiedenen Systemen (z.B. Polymere, Lacke, Farben, Papier, Keramik, Medizinische Erzeugnisse oder kosmetische Produkte) einarbeiten lässt. Insbesondere soll die organische Substanz gleichmäßig über die Oberfläche des Bariumsulfats verteilt sein und soll der Anteil an organischer Substanz weniger als 15 Gew.-%, bevorzugt weniger als 10 Gew.-% des fertigen Additivs (gecoatete Bariumsulfat) betragen. Weiterhin soll das Herstellverfahren mit einer geringeren Wassermenge auskommen, als bisher bekannte Verfahren, bei denen die organische Substanz zu einer Suspension von Bariumsulfat in Wasser gegeben wird. Gegebenenfalls soll das Modifizieren des Bariumsulfats mit organischer Substanz auch ganz ohne Wasser durchgeführt werden können.

Gelöst wird die Aufgabe durch ein Verfahren, bei dem die Oberfläche von Bariumsulfat mit zwei verschiedenen organischen Additiven belegt (gecoatet) wird, wobei ein Additiv ein Netzmittel, Dispergiermittel oder Deflockulationsmittel enthält welches Kaliumpolyacrylatcopolymer ist und wobei der Anteil der Additive maximal 15 Gew.-%, bevorzugt maximal 10 Gew.-%, bzw. 5 Gew.-% und besonders bevorzugt maximal 3 Gew.-% des gecoateten Bariumsulfats beträgt und das zweite organische Additiv 1,1,1,-Trimethylolpropan ist wobei Bariumsulfat als wässrige Suspension oder als Filterkuchen (pastenförmig oder als Teig) vorliegt und die beiden verschiedenen organischen Additive einzeln oder im Gemisch zu Bariumsulfat gegeben werden, wobei die erhaltene Suspension getrocknet wird und wobei das gecoatete, Bariumsulfat per eine mittlere Komgröße $d_{50}$ von 0.01 bis 2 $\mu$m aufweist.

Unter Netz-, Dispergier- oder Deflockulationsmittel ist hier eine grenzflächenaktive Substanz zu verstehen, die das Dispergieren (= Zerteilen) eines pulverförmigen Stoffes in einem flüssigen Medium erleichtert, indem die Grenzflächenspannung zwischen zwei gegensätzlich geladenen Komponenten durch Umladen der Oberfläche herabgesetzt wird. Dadurch werden beim Dispergiervorgang die vorhandenen Agglomerate zerlegt, so dass eine Re-Agglomeration (= Zusammenballung) oder Flockulation (= Zusammenlagerung) verhindert wird.

Das Netz-, Dispergier- oder Deflockulationsmittel (im folgenden nur noch Dispergiermittel genannt) ist ein K-) salz von Acrylat- copolymeren (mit einem bevorzugten Molekulargewicht bis zu 15000).

Die Zugabemenge des Dispergiermittels ist abhängig von der mittleren Teilchengröße des Bariumsulfats. Je feiner das Bariumsulfat ist, desto höher ist die Zugabemenge des Dispergiermittels. Die Zugabemenge des Dispergiermittels liegt bevorzugt bei 0,01 bis 10 Gew.-%, besonders bevorzugt bei 0,01 bis 5 Gew.-%, bzw. bei 0,1 bis 3 Gew.-%, bezogen auf das fertige, gecoatete Produkt.

Das zweite organische Additiv ist 1,1,1-Trimethylolpropan.

Auch die Zugabemenge des zweiten organischen Additivs ist abhängig von der mittleren Teilchengröße des Bariumsulfats. Je feiner das Bariumsulfat ist desto höher ist die Zugabemenge des zweiten organischen Additivs. Die Zugabemenge des zweiten organischen Additivs liegt bevorzugt bei 0,01 bis 10 Gew.-%, besonders bevorzugt bei 0,01 bis 5 Gew.-%, bzw. bei 0,1 bis 3 Gew.-%, bezogen auf des fertige, gecoatete Produkt.

Die Zugabe des Dispergiermittels zu Bariumsulfat kann separat oder in Mischung mit dem zweiten organischen Additiv erfolgen. Bei separater Zugabe ist die Zugabereihenfolge prinzipiell egal. Aus praktischen Gründen wird bei separater Zugabe allerdings bevorzugt erst das Dispergiermittel und dann das zweite Additiv zugegeben.

Das Bariumsulfat kann als wässrige Suspension oder als Filterkuchen (pastenförmig oder als Teig) vorliegen. Vorteilhaft ist es, einen Filterkuchen ungetrocknet (z.B. aus laufender Produktion) einzusetzen, da dann die anorganischen Partikel noch nicht gänzlich agglomeriert sind und dadurch der Dispergieraufwand nach Zugabe des Dispergiermittels und des zweiten organischen Additivs minimiert wird. Falls das Bariumsulfat in Pulverform vorliegen, empfiehlt sich vor der Herstellung einer Suspension eine Nassmahlung des Bariumsulfats. Die Suspension oder der Filterkuchen haben bevorzugt einen Feststoffgehalt von 15 bis 85 Gew.-%, besonders bevorzugt von 25 bis 80 Gew.-% und ganz besonders bevorzugt von 50 bis 80 Gew.-%.

Die Trocknung der mit den Additiven versehenen Suspension kann mittels üblicher Trocknungsaggregate erfolgen. Bevorzugt werden Sprühtrockner, Mahltrockner oder Vakuumtrockner verwendet. Im Bedarfsfalle kann das getrocknete Produkt anschließend gemahlen werden, z.B. mittels einer Dampfstrahlmühle, Luftstrahlmühle oder Stiftmühle.

Überraschend wurde festgestellt, dass sich Suspensionen oder Filterkuchen auch bei einem sehr hohen Feststoffgehalt nach Zugabe des Dispergiermittels und des zweiten organischen Additivs so weit verflüssigen, dass eine optimale Verteilung der Additive auf der Partikeloberfläche gewährleistet ist und sich die erhaltene Suspension problemlos pumpen lässt, was den Verfahrensaufwand erheblich reduziert. Durch den niedrigen Wasseranteil einer solch "flüssigen" Suspension reduziert sich weiterhin der Trocknungsaufwand.

Es ist auch möglich, als Pulver vorliegendes Bariumsulfat in einem Mischer mit dem Dispergiermittel und dem zweiten organischen Additiv zu mischen und anschließend zu mahlen, z.B. in einer Dampfstrahlmühle, Luftstrahlmühle oder Stiftmühle.

Das gecoatete Bariumsulfat hat eine mittlere Korngröße $d_{50}$ von 0,01 bis 2 µm.

Ein Vorteil des erfindungsgemäßen Verfahrens liegt darin, dass das erhaltene gecoatete Bariumsulfat eine hervorragende Fließfähigkeit besitzen und sich pneumatisch sehr gut fördern lassen. Aufgrund dieser Eigenschaften lassen sie sich für die Zugabe in Polymerschmelzen hervorragend dosieren. Soll das gecoatete Bariumsulfat wiederum als Suspension oder Slurry weiterverarbeitet werden, so lassen sie sich ohne großen Dispergieraufwand zu (auch nichtwässrigen) "flüssigen" Dispersionen mit hohem Feststoffgehalt, z.B. 30 bis 80 Gew.-%, bevorzugt 40 bis 75 Gew.-%, verarbeiten. Zudem wurde festgestellt, dass solche

Suspensionen eine große Lagerstabilität aufweisen, bzw. sich im Falle eines Festsstoffabsetzens sehr leicht re-dispergieren lassen. Es findet also keine Agglomeration der Partikel statt.

Sollte bei der Herstellung einer solchen Suspension (Dispergierung in Wasser oder einem organischen Lösungsmittel) eine unerwünschte Schaumbildung auftreten, so kann durch die Zugabe eines Entschäumers die Schaumbildung unterbunden werden. Die Zugabemenge kann bis zu 3 Gew.-% betragen, liegt aber in der Regel unter 1,5 Gew.-%, jeweils bezogen auf den Feststoffgehalt der Suspension.

Das nach dem erfindungsgemäßen Verfahren hergestellte gecoatete Bariumsulfat kann z.B. in Kunststoffen, besonders bei der Polymerherstellung (z.B. thermoplastische oder duroplastische Polymere), in Lacken, Farben (z.B. Druckfarben), Fasern, Papier (z.B. Laminatpapier), Klebstoffen, Keramik (z.B. Elektro- und Magenetkeramik), Emaille, Adsorptionsmittel, Ionenaustauschern, Schleif- und Poliermitteln, Kühlschmierstoffen und Kühlschmierstoffkonzentraten, Feuerfestprodukten, Hartbetonstoffen, Medizinische Erzeugnissen und Kosmetika (z.B. Puder, Salben, Zahnpasta) verwendet werden.

Das nach dem erfindungsgemäßen Verfahren hergestellte gecoatete Bariumsulfat verteilt sich in Polymeren sehr viel besser als nach dem Stand der Technik behandelte feinteilige, anorganische Festkörper. Dies äußert sich u.a. im sogenannten Druckfiltertest.

Der Gegenstand der Erfindung wird anhand von Beispielen näher erläutert:

**Vorbereitung der Beispiele A und 1: Herstellung einer BaSO$_4$-Paste**

In bekannter Weise wurde durch die Reaktion von Barium-Ionen mit Sulfat-Ionen Bariumsulfat aus wässriger Lösung gefällt. Das gefällte BaSO$_4$ wurde von der Mutterlauge getrennt und gewaschen. Der erhaltene pastenförmige Filterkuchen bestand aus 67 Gew.-% Trockensubstanz und 33 Gew.-% Wasser. Die Teilchengröße $d_{50}$ der BaSO$_4$-Partikel betrug 0,45 µm.

**Vergleichsbeispiel A: Belegung der BaSO$_4$-Oberfläche mit einem Additiv gemäß Stand der Technik**

In einem Rührbehälter wurden 200 l vollentsalztes Wasser vorgelegt und 120 kg der vorbereiteten BaSO$_4$-Paste (enthielt 80 kg BaSO$_4$) unter Rühren hin-

zugegeben. Anschließend wurden 1330 ml einer wässrigen 1,1,1-Trimethylolpropan-Lösung, welche 600 g 1,1,1-Trimethylolpropan pro Liter Lösung enthielt, portionsweise innerhalb von 30 Minuten unter Einwirkung der Scherkräfte eines Dissolvers (2000 U/Min) zugegeben. Es wurden demnach 798 g (0,99 Gew.-% bezogen auf das Fertigprodukt) 1,1,1-Trimethylolpropan eingebracht. Die Mischung wurde weitere 15 Minuten dispergiert. Die erhaltene Suspension hatte einen Feststoffgehalt von 325 g/l (26,2 Gew.-%) und wurde unter folgenden Bedingungen sprühgetrocknet:
Eintrittstemperatur 535 °C, Austrittstemperatur 135 °C, Zerstäubungsscheibe 18000 U/Min, Durchsatz 110 l/h.

Das erhaltene pulverförmige und einfach gecoatete $BaSO_4$ hatte eine Feuchte von 0,15 Gew.-% und eine mittlere Teilchengröße $d_{50}$ von 0,54 $\mu$m.

Als problematisch erwies sich die Suspension vor der Trocknung hinsichtlich ihrer Rühr- und Pumpeigenschaften. Der Grund lag in einer hohen Viskosität der Suspension, was bei einem Feststoffgehalt von 26,2 Gew.-% auch nicht anders zu erwarten war.

**Beispiel 1: Belegung der $BaSO_4$-Oberfläche mit einem Dispergiermittel und einem zweiten organischen Additiv**

In einem Rührbehälter wurden 28 l vollentsalztes Wasser vorgelegt und 149 kg der vorbereiteten $BaSO_4$-Paste (enthielt 99,8 kg $BaSO_4$) unter Rühren hinzugegeben. Anschließend wurden 400 g einer 40 %-igen Kaliumpolyacrylatcopolymerlösung in Wasser (mit einer mittleren Molmasse von ca. 5000) portionsweise innerhalb von 30 Minuten unter Einwirkung der Scherkräfte eines Dissolvers (2000 U/Min) zugegeben. Es wurden demnach 160 g (0,16 Gew.-% bezogen auf das Fertigprodukt) Kaliumpolyacrylatcopolymer eingebracht. Die Mischung wurde weitere 15 Minuten dispergiert. Anschließend wurden unter Rühren 1642 ml einer wässrigen 1,1,1-Trimethylolpropan-Lösung, welche 600 g 1,1,1-Trimethylolpropan pro Liter Lösung enthielt, portionsweise zugegeben. Es wurden demnach 985 g (0,98 Gew.-% bezogen auf das Fertigprodukt) 1,1,1-Trimethylolpropan eingebracht. Danach wurde weitere 15 Minuten gerührt. Die so erhaltene Suspension hatte einen Feststoffgehalt von 960 g/l (55,9 Gew.-%) und wurde wie unter Vergleichsbeispiel A beschrieben sprühgetrocknet.

Das so hergestellte gecoatete $BaSO_4$-Pulver hatte eine Feuchte von 0,15 Gew.-% und eine mittlere Teilchengröße $d_{50}$ von 0,48 $\mu$m.

Die Suspension hatte vor der Trocknung trotz des sehr hohen Feststoffgehaltes von 55,9 Gew.-% eine überraschend niedrige Viskosität und wies damit sehr gute Rühr- und Pumpeigenschaften auf. Die Suspension konnte problemlos getrocknet werden.

**Vergleichsbeispiel B: Verarbeitung des gecoateten $BaSO_4$ aus Vergleichsbeispiel A in einer Polymerschmelze**

In einem Doppelschneckenextruder wurden 27 kg $BaSO_4$-Pulver aus Vergleichsbeispiel A in 23 kg Polyethylenterephthalat (PET der Firma KoSa Typ: Polyclear 1101) eingearbeitet. Die Temperatur der Heizzone lag bei 265 °C. Die Konzentration des $BaSO_4$ im so hergestellten PET-Masterbatch betrug 54 Gew.-%.

**Beispiel 2: Verarbeitung des gecoateten $BaSO_4$ aus Beispiel 1 in einer Polymerschmelze**

Analog dem Vergleichsbeispiel B wurden 27 kg des nach dem erfindungsgemäßen Verfahren hergestellten $BaSO_4$-Pulvers aus Beispiel 1 in 23 kg Polyethylenterephthalat (PET der Firma KoSa Typ: Polyclear 1101) eingearbeitet.

**Beispiel 3: Vergleich der Polymeren aus Beispiel 2 und Vergleichsbeispiel B anhand des DF-Wertes**

Zu Überprüfung der Verteilung der $BaSO_4$-Feststoffteilchen im Polymer wurden an den beiden 54 %-igen $BaSO_4$-PET-Masterbatches Druckfiltertests durchgeführt. Der dabei erhaltene DF-Wert gilt als Maßzahl für die Qualität von Masterbatches. Die Qualität der Masterbatches hinsichtlich der Verteilung der anorganischen Feststoffpartikel im Polymer ist umso besser, je niedriger der DF-Wert ist. Die Masterbatches aus Beispiel 2 und Vergleichsbeispiel B wurden in einem Extruder kontinuierlich aufgeschmolzen und einem 14 $\mu$m-Siebgewebe (Filterfläche 6,16 cm$^2$) zugeführt. Die Temperatur lag in der 1. Heizzone bei 265 °C, in der 2. Heizzone bei 270 °C und in der 3., 4. und 5. Heizzone bei 280 °C. Der Durchsatz betrug ca. 40 g/Minute.

Die Messung ist bei Erreichen eines Druckes von 200 bar oder spätestens nach 60 Minuten beendet. Die Berechnung der Druckfiltertestwerte (DF-Wert) erfolgt nach folgender Formel:

$$DF = \frac{(p_{max} - p_0) \times F \times 100}{(t \times K \times G)} \ [bar \times cm^2/g]$$

Dabei bedeuten:

$p_{max}$ = Enddruck (bar)
$p_0$ = Anfangsdruck (bar)
F = Filterfläche (cm$^2$)
t = Messzeit (Min)
K = Konzentration (% Pigment)
G = Durchsatz (g/Min)

Auf diese Weise wurde für den im Vergleichsbeispiel B hergestellten Masterbatch ein DF-Wert von 0,87 bar·cm$^2$/g und für den im erfindungsgemäßen Beispiel hergestellten Masterbatch ein DF-Wert von nur 0,19 bar·cm$^2$/g gefunden. Dieser niedrige DF-Wert zeigt eindrucksvoll die Überlegenheit der nach dem erfindungsgemäßen Verfahren hergestellten gecoateten, feinteiligen, anorganischen Festkörper bei der Einarbeitung in Polymere.

**Patentansprüche**

1. Verfahren zur Herstellung von gecoateten, feinteiligen, anorganischen Festkörpern, **dadurch gekennzeichnet, dass** die Oberfläche von feinteiligen, anorganischen Festkörperpartikeln, wobei als feinteiliger, anorganischer Festkörper Bariumsulfat eingesetzt wird, welches mit zwei verschiedenen organischen Additiven belegt wird,
   wobei ein Additiv ein Netzmittel, Dispergiermittel oder Deflockulationsmittel, wobei es Kaliumpolyacrylatcopolymer enthält und das zweite arganische Additiv 1,1,1-Trimethylolpropan ist und wobei der Anteil der Additive maximal 15 Gew.-% der gecoateten Festkörper beträgt,
   wobei die feinteiligen, anorganischen Festkörper als wässrige Suspension oder als Filterkuchen (pastenförmig oder als Teig) vorliegen und die beiden verschiedenen organischen Additive einzeln oder Im Gemisch zu den feinteiligen, anorganischen Festkörpern gegeben werden,
   wobei die erhaltene Suspension getrocknet wird und wobei die gecoateten, feinteiligen, anorganischen Festkörper eine mittlere Korngröße d$_{50}$ von 0.01 bis 2 μm aufweisen.

2. Verfahren nach Anspruch 1, **dadurch gekennzeichnet, dass** die feinteiligen, anorganischen Festkörper anstelle einer Suspension oder anstelle eines Filterkuchens als Pulver vorliegen und in einem Mischer mit den beiden verschiedenen organischen Additiven gemischt und anschließend gemahlen werden.

3. Verfahren nach Anspruch 1 oder 2, **dadurch gekennzeichnet, dass** der Anteil der Additive maximal 10 Gew.-% der gecoateten Festkörper beträgt

4. Verfahren nach einem der Ansprüche 1 bis 3, **dadurch gekennzeichnet, dass** der Anteil der Additive maximal 6 Gew.-% der gecoateten Festkörper beträgt.

5. Verfahren nach einem der Ansprüche 1 bis 4, **dadurch gekennzeichnet, dass** die Zugabemenge des Netz-, Dispergier- oder Deflockulationsmittels bei 0,001 bis 10 Gew.-%, bezogen auf das fertige gecoatete Produkt, liegt.

6. Verfahren nach Anspruch 5, **dadurch gekennzeichnet, dass** die Zugabemenge des Netz-, Dispergier- oder Deflockulationsmittels bei 0,001 bis 5 Gew.-%, bezogen auf das fertige gecoatete Produkt, liegt.

7. Verfahren nach einem der Ansprüche 1 bis 6, **dadurch gekennzeichnet, dass** die Zugabemenge des zweiten organischen Additivs bei 0,01 bis 5 Gew.-%, bezogen auf das fertige gecoatete Produkt, liegt.

8. Verfahren nach einem der Ansprüche 1 bis 7, **dadurch gekennzeichnet, dass** die gecoateten, feinteiligen, anorganischen Festkörper eine mittlere Korngröße d$_{50}$ von 0.1 bis 1 μm aufweisen.

9. Verwendung der nach einem Verfahren nach einem der Ansprüche 1 bis 8 hergestellten gecoateten, feinteiligen, anorganischen Festkörpern als Additiv in Kunststoffen, in der Polymerherstellung, in Lacken und Farben, in der Papierherstellung, In keramischen, medizinischen und kosmetischen Produkten.

10. Verwendung nach Anspruch 9, **dadurch gekennzeichnet, dass** die gecoateten, feinteiligen, anorganischen Festkörper in Wasser oder einem organischen Lösungsmittel dispergiert werden, wobei ein Entschäumer In einer Zugabemenge von bis zu 3 Gew.-%, bezogen auf den Feststoffgehalt der Suspension, zugegeben wird.

**Claims**

1. Process for the preparation of coated finely divided inorganic solids, **characterised in that** the surface of finely divided inorganic solids particles, whereby as finely divided inorganic solid barium sulfate is used, which is coated with two different organic additives,
   one additive comprising a wetting agent, dispersing agent or deflocculating agent and containing potassium acrylate copolymer and the second organic additive being 1,1,1-trimethylolpropane and the proportion of additives being not more than 15 wt.% of the coated solids,
   the finely divided inorganic solids being in the form of an aqueous suspension or in the form of a filter cake (paste-like or in dough form) and the two different organic additives being added to the finely divided inorganic solids separately or in the form of a mixture,
   the resulting suspension being dried and the coated finely divided inorganic solids having a mean particle size d$_{50}$ of from 0.01 to 2 μm.

2. Process according to claim 1, **characterised in that** the finely divided inorganic solids are in the form of a powder instead of in the form of a suspension or filter cake and are mixed with the two different organic additives in a mixer and the mixture is then ground.

3. Process according to claim 1 or 2, **characterised in that** the proportion of additives is not more than 10 wt.% of the coated solids.

4. Process according to any one of claims 1 to 3, **characterised in that** the proportion of additives is not more than 5 wt.% of the coated solids.

5. Process according to any one of claims 1 to 4, **characterised in that** the added amount of wetting, dispersing or deflocculating agent is from 0.001 to 10 wt.%, based on the finished coated product.

6. Process according to claim 5, **characterised in that** the added amount of wetting, dispersing or deflocculating agent is from 0.001 to 5 wt.%, based on the finished coated product.

7. Process according to any one of claims 1 to 6, **characterised in that** the added amount of the second organic additive is from 0.01 to 5 wt.%, based on the finished coated product.

8. Process according to any one of claims 1 to 7, **characterised in that** the coated finely divided inorganic solids have a mean particle size $d_{50}$ of from 0.1 to 1 $\mu$m.

9. Use of the coated finely divided inorganic solids prepared by a process according to any one of claims 1 to 8 as an additive in plastics, in the preparation of polymers, in surface coatings and paints/inks, in paper production, in ceramics, medical and cosmetic products.

10. Use according to claim 9, **characterised in that** the coated finely divided inorganic solids are dispersed in water or an organic solvent, an antifoam being added in an added amount of up to 3 wt.%, based on the solids content of the suspension.

**Revendications**

1. Procédé de production de corps solides inorganiques enduits, finement divisés, **caractérisé en ce que** la surface des particules inorganiques de corps solides finement divisés, étant entendu que l'on utilise du sulfate de baryum en tant que corps solides finement divisés, est garnie de deux additifs organiques différents, l'un desquels additifs contient un agent de réticulation, de dispersion ou de défloculation, qui contient un sel de potassium de copolymère polyacrylate, alors que le second additif organique est du 1,1,1-triméthylol-propane, le taux des additifs atteignant au plus 15 % du poids du corps solide enduit, les corps solides inorganiques et finement divisés se présentent sous la forme d'une suspension aqueuse ou d'un gâteau de filtration (à l'état pâteux), les deux additifs organiques différents sont ajoutés individuellement ou en mélange aux corps solides inorganiques finement divisés, et la suspension obtenue est séchée, les corps solides inorganiques finement divisés et enduits présentant une granulométrie moyenne $d_{50}$ de 0,01 à 2 $\mu$m.

2. Procédé selon la revendication 1, **caractérisé en ce que** les corps solides inorganiques finement divisés, au lieu d'être sous forme d'une suspension ou d'un gâteau de filtration, se présentent sous la forme d'une poudre qui est mélangée dans un mixeur avec les deux additifs organiques différents, et ensuite moulue.

3. Procédé selon la revendication 1 ou 2, **caractérisé en ce que** le taux des additifs atteint au maximum 10 % du poids des corps solides enduits.

4. Procédé selon l'une des revendications 1 à 3, **caractérisé en ce que** le taux des additifs atteint au maximum 5 % du poids des corps solides enduits.

5. Procédé selon une des revendications 1 à 4, **caractérisé en ce que** l'addition de l'agent de réticulation, de dispersion ou de défloculation s'effectue au taux pondéral de 0,001 à 10 % du produit fini enduit.

6. Procédé selon la revendication 5, **caractérisé en ce que** l'addi-tion de l'agent de réticulation, de dispersion ou de défloculation s'ef-fectue au taux pondéral de 0,001 à 5 % du produit fini enduit.

7. Procédé selon l'une des revendications 1 à 6, **caractérisé en ce que** l'addition du second additif organique s'effectue au taux pondé-ral de 0,01 à 5 % du produit fini enduit.

8. Procédé selon l'une des revendications 1 à 7, **caractérisé en ce que** les corps solides inorganiques finement divisés et enduits présentent une granulométrie moyenne $d_{50}$ de 0,1 à 1 $\mu$m.

9. Utilisation des corps solides inorganiques finement divisés et enduits, fabriqués par un procédé selon l'une des revendications 1 à 8, comme additifs dans des matières plastiques, dans la fabrication de polymères, dans des peintures et colorants, dans la fabrication du papier, ou dans des produits céramiques, médicaux ou cosmétiques.

10. Utilisation selon la revendication 9, **caractérisée en**

**ce que** les corps solides inorganiques finement divisés et enduits sont disper-sés dans de l'eau ou dans un solvant organique, puis un agent anti-moussant est ajouté au taux pondéral de 3 % par rapport aux solides contenus dans la suspension.

**EP 1 483 336 B2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19839856 A1
- DE 10005685 A1